# FASCICULE DE BREVET EUROPEEN

(11) **EP 4 330 203 B1**
(45) Date de publication et mention de la délivrance du brevet: **16.04.2025**
(21) Numéro de dépôt: 22726491.8
(22) Date de dépôt: 28.04.2022
(51) Int. Cl.: C03C 1/00, C03C 3/091, C03B 37/00, C03C 3/078, C03C 13/04, C03C 13/06

(54) **PROCEDE DE FABRICATION DE FIBRES DE VERRE A PARTIR DE MATIERES MINERALES NON TRANSFORMEES**
VERFAHREN ZUR HERSTELLUNG VON GLASFASERN AUS UNBEHANDELTEN MINERALMATERIALIEN
METHOD FOR MANUFACTURING GLASS FIBERS FROM UNPROCESSED MINERAL MATERIALS

(30) Priorité: 28.04.2021 FR 2104440
(43) Date de publication de la demande: 06.03.2024
(73) Titulaire: SAINT-GOBAIN ISOVER, 92400 Courbevoie (FR); Saint-Gobain Adfors, 92400 Courbevoie (FR)
(72) Inventeur: DI PIERRO, Simonpietro, 60800 ORMOY-VILLERS (FR); CINTORA GONZALEZ, Octavio, 95150 TAVERNY (FR); COCHARD, Jean-Patrick, 92160 ANTONY (FR); ORTIZ, Aurélie, 78000 VERSAILLES (FR)
(74) Mandataire: Saint-Gobain Recherche
(86) Numéro de dépôt international: PCT/FR2022/050821
(87) Numéro de publication internationale: WO 2022/229571

(56) Documents cités:
- EP-A1- 0 525 816
- CN-A- 104 418 500
- CN-B- 103 103 695

## Description

L'invention concerne le domaine de la fusion d'un mélange de matières premières, en particulier pour la fabrication d'une laine de verre tel qu'utilisée notamment dans le domaine de l'isolation thermique et/ou acoustique des bâtiments ou autres. Selon un autre aspect, l'invention concerne également la fabrication de verre C utilisé notamment dans le domaine des fibres textiles et des matériaux composites.

La fabrication, notamment par la société déposante de laine de verre par fusion et fibrage de matières premières naturelles et abondantes (sable ou roche volcanique) est un procédé connu et maîtrisé depuis longtemps. Les produits isolants ainsi obtenus se présentent sous la forme d'un «matelas» de laine de verre composé d'une structure variant de souple à rigide et emprisonnant de l'air de façon stable et immobile dans l'enchevêtrement des fibres.

La laine de verre possède d'excellentes propriétés thermiques et acoustiques qui lui confèrent une place de choix dans l'isolation des bâtiments d'habitation et des bâtiments non résidentiels (tertiaires, commerciaux, industriels) depuis plus de 80 ans. Les formes sous lesquelles la laine de verre est commercialisée sont variées : rouleaux, panneaux souples ou semi-rigides à dérouler, panneaux rigides, coquilles, nappes ou flocons.

Grâce à sa structure enchevêtrée générant une multitude de petites cavités, la laine de verre est un matériau poreux emprisonnant de l'air. L'air immobile emprisonné dans ces pores donne à la laine de verre un fort pouvoir isolant avec un minimum de matière.

La base de fabrication de la laine de verre ou du verre C est un sable de carrière (naturellement abondant) auquel on ajoute des fondants comme le carbonate de sodium, et au moins un alcalino-terreux (pour donner au verre de la résistance à l'hydrolyse) comme le calcaire (carbonate de calcium) et la dolomie (CaMg(CO₃)₂). Selon certaines réalisations, du bore peut également être introduit pour lui conférer une meilleure résistance chimique et hydrolytique (notamment pour le verre C) ou encore pour en améliorer les propriétés thermiques, notamment pour la lame de verre. Le fibrage est réalisé dans des conditions telles qu'il est intégral (pas de résidus comme des infondus). Le fibrage se fait par centrifugation au travers d'assiettes percées. La matière en fusion passe dans une filière puis dans des assiettes de fibrage en continu d'où elle ressort sous forme de fils de verre qui sont pulvérisés de polymère (le liant) pour former un matelas. Après ajout des liants et autres des éléments spécifiques à chaque usage, le matelas de laine est polymérisé et calandré.

Aux critères de qualité et de faisabilité industrielle et économique, s'étant ajouté depuis quelques années celui d'un caractère biodégradable de la laine de verre, à savoir la capacité de celle-ci à se dissoudre rapidement en milieu physiologique, en vue de prévenir tout risque pathogène potentiel lié à l'accumulation éventuelle des fibres les plus fines dans l'organisme par inhalation, une composition de laine de verre adaptée en conséquence a été proposée dans la demande EP 399320, à laquelle on se réfèrera pour plus de précision sur cette technique.

Parallèlement on connait également un procédé pour la fabrication de fibres de verre, en particulier de fibres de verre C.

Le verre C est un verre spécialement conçu pour sa meilleure résistance chimique aux solvants et à l'eau. Les matières premières sont fondues et le verre obtenu passe par des orifices appelés bushings. Les bushings sont généralement en Pt. Les fils de verre, après sortie du bushing, sont refroidis à l'air ou à la vapeur pour former un matelas.

Il peut être utilisé sous la forme d'une fibre d'environ 5 microns d'épaisseur et de 10 à 4000 microns de longueur, voire jusqu'à quelques centimètres de longueur. La bonne résistance chimique du verre borosilicate C le rend idéal pour une utilisation pour diverses applications comme dans les peintures vinylester, époxy acryliques et les revêtements acryliques comme barrière contre les attaques corrosives des produits chimiques et de l'humidité.

Habituellement, le verre C est également obtenu par fusion d'un bain de matière première comprenant de la silice, du calcaire, du feldspath, du borax, du carbonate de sodium et éventuellement de la dolomie, les composants de base étant judicieusement choisis pour fournir une composition de verre produisant des fibres alliant souplesse et robustesse à la traction mécanique ainsi qu'aux agents chimiques acides ou basiques.

Le mélange fondu (fibre de verre pour l'isolation ou le verre C) est ainsi habituellement préparé par la fusion dans un four de matières premières comprenant de la silice, une source de sodium, le plus souvent du carbonate de sodium Na₂CO₃, au moins une source d'alcalino-terreux (magnésium et/ou calcium) sous la forme de calcaire (carbonate de calcium) et/ou de dolomie (CaMg(COₛ)₂). Les documents CN 104 418 500 A, CN 103 103 695 B et EP 0 525 816 A1 révèlent par exemple l'utilisation des minéraux naturels comme matières premières pour la fabrication de fibres de verre.

Au cours de la fusion du mélange initial pour la fabrication de la laine de verre ou du verre C, les carbonates dégagent du gaz carbonique dont les bulles contribuent au brassage de la masse en cours de fusion. Par ailleurs, certains carbonates comme la dolomie, avant même de libérer leur CO₂, se divisent en particules plus fines selon le phénomène dit de décrépitation, lequel peut être assez violent et générer des poussières venant encrasser et même corroder les divers conduits équipant les fours (cheminées, régénérateurs, etc). Dans un procédé classique de fabrication de laine de verre ou de verre C, l'émission de CO₂ due à la fusion des matières premières est généralement de l'ordre de 10 à 25% de la masse totale des matières premières utilisées.

Par ailleurs, le gaz carbonique est un gaz à effet de serre et il est souhaitable de mettre au point des procédés de fabrication de laine minérale générant le moins de CO₂ possible pour des raisons environnementales, tout en menant à un produit de bonne qualité et pour un coût acceptable.

En plus du dégagement de CO₂ directement lors du procédé de fusion du bain de matières premières, il est donc important de considérer le procédé de fabrication du verre dans sa globalité, en tenant compte d'autres facteurs comme le transport des matières premières ou encore le coût énergétique de la mise à disposition desdites matières premières en vue de leur utilisation dans le procédé de fabrication du verre. Dans un tel but, l'utilisation de matières premières minérales non transformées, à la place des matières synthétiques débarrassées de leurs impuretés telles qu'actuellement utilisées, présente l'avantage de contribuer à la réduction des émissions de CO₂ puisqu'aucune autre énergie de transformation que l'étape de fusion n'entre dans le bilan global de ladite fabrication.

Le choix des matières premières précédemment citées est primordial pour obtenir une bonne qualité de verre notamment après son fibrage. Parmi les propriétés jugées comme essentielles, on peut citer notamment le rendement de la fusion (ratio entre la quantité de verre produite et la quantité de matières premières enfournée), la qualité de l'affinage qui se traduit par un nombre minime de bulles résiduelles dans le verre, l'homogénéité du verre (notamment l'homogénéité en SiO₂), ainsi que le nombre d'infondus.

La consommation énergétique (énergie nécessaire à la fusion du mélange de matières premières) est également un élément à prendre en compte. En résumé, dans un objectif de réduire les coûts énergétiques et optimiser le bilan CO₂, il est important de tenir compte de l'ensemble des étapes aboutissant à la formation du verre et à la préparation des matières premières en plus de l'étape finale de fusion du bain de matières premières.

L'objet de la présente invention est de contribuer à résoudre un tel problème technique en proposant un procédé de fabrication de fibre de verre pour lequel les émissions de CO₂ sont effectivement diminuées, sur la base de l'ensemble des étapes aboutissant à la formation de ladite fibre de verre et pour lequel les étapes de transformation de matière avant la fusion du bain ont été simplifiées et ce pour une qualité du verre finalement obtenu au moins équivalente.

Ce mélange de matières premières est destiné à être chauffé à une température et dans des conditions permettant sa fusion pour l'obtention d'un bain fondu répondant à ladite composition cible finale de la fibre de verre.

L'originalité de la présente invention réside dans le choix des matières premières. En effet, il a été découvert qu'il était possible d'utiliser des oxydes minéraux naturels, en particulier des silicates naturels, c'est dire sous leur composition initiale géologique après leur extraction de leur gisement, en particulier sans altération chimique visant à en modifier la composition initiale, c'est-à-dire des matières minérales non transformées chimiquement comme source de magnésium et/ou de calcium, voire comme source d'aluminium, ce choix conduisant à la diminution du dégagement de CO₂ lors de la réaction de fusion. En particulier, selon le procédé de la présente invention, on se base initialement sur la composition exacte de ces matières minérales géologiques non transformées, telle que déterminée précisément par toute technique adéquate (par exemple analyse chimique, diffraction des rayons X, etc.) pour déterminer la composition du bain initial. Plus précisément, sur la base de cette détermination initiale de la composition de la matière minérale, on calcule et on ajuste les proportions nécessaires en les autres composants du bain initial (tels que la silice, le carbonate ou l'hydroxyde de sodium, et éventuellement un complément de calcaire et/ou la dolomie) pour arriver à ladite composition cible ; on arrive de cette manière à minimiser la quantité de CO₂ dégagée, telle que mesurée sur l'ensemble des étapes conduisant à la formation des fibres de verre, et pas uniquement sur la base de l'étape finale de fusion du bain de matières premières. Selon l'invention cependant lesdits oxydes minéraux peuvent bien entendu subir des étapes préalables à leur utilisation comme matière première de la fusion mais sans transformation chimique des grains cristallins constituant l'oxyde minéral. De telles étapes peuvent être un concassage, un criblage, un lavage ou encore une flottation, une séparation magnétique ou toute autre séparation physique des impuretés présentes entre lesdits grains de la matière minérale naturelle.

Plus précisément, la présente invention se rapporte à un procédé de fabrication de verre, en particulier de fibres de verre présentant une composition cible, comprenant la fusion d'un mélange de matières premières constituant un bain de fusion, ladite composition cible répondant à la formulation suivante, en pourcentage poids :
SiO₂ : entre 50 et 75%, de préférence entre 60 et 70%,
Na₂O: entre 10 et 25%, de préférence entre 10 et 20%,
CaO: entre 5 et 15%, de préférence entre 5 et 10%,
MgO : entre 1 à 10%, de préférence entre 2 et 5%,
CaO et MgO représentant ensemble de préférence entre 5 et 20%,
B₂O₃ : entre 0 et 10%, de préférence entre 2 et 8%, de préférence moins de 6%
Al₂O₃ : entre 0 et 8%, de préférence entre 1 et 6%,
K₂O : entre 0 et 5%, de préférence entre 0,5 et 2%,
Na₂O et K₂O représentant ensemble de préférence entre 12 et 20%,
Oxyde de fer : entre 0 et 3%, de préférence moins de 2%, de préférence encore moins de 1%,
autre (s) oxyde (s) : entre 0 et 5 % poids en cumulé, de préférence moins de 3% en cumulé,
le reste étant constitué d'impuretés inévitables,
ledit procédé étant caractérisé en ce qu'il comprend les étapes suivantes :
   a) on sélectionne les matières premières dudit bain de fusion dont au moins:
      - une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
      - au moins une source de sodium de préférence choisie parmi l'hydroxyde de sodium NaOH, le carbonate de sodium Na₂CO₃ ou un mélange de d'hydroxyde de sodium NaOH et de carbonate de sodium Na₂CO₃,
      - au moins une source de bore de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
      - au moins une source de calcium choisie parmi un silicate de calcium minéral naturel comprenant, en pourcentage poids, plus de 30% de SiO₂ et plus de 10% de CaO, CaO et SiO₂ représentant ensemble plus de 60% du poids total de ladite source, et/ou
      - au moins une source de magnésium choisie parmi un silicate de magnésium minéral naturel comprenant, en pourcentage poids, plus de 30% de SiO₂ et plus de 10% de MgO, MgO et SiO₂ représentant ensemble plus de 60% du poids total de ladite source,
      - éventuellement au moins une source d'aluminium choisie parmi un oxyde mixte d'aluminium avec au moins un élément choisi dans le groupe constitué par Si, Ca, Na, K en particulier un silicate d'aluminium, par exemple du kaolin, de la néphéline, ou la pyrophyllite, dans lequel lesdites sources de calcium et/ou de magnésium et/ou d'aluminium sont des matières minérales naturelles, c'est à dire issues d'un milieu géologique naturel et non transformées,
      - optionnellement du calcaire CaCO₃ ou un hydroxyde de calcium tel que la Portlandite Ca(OH)₂,
      - optionnellement de la dolomie CaMg(CO₃)₂,
      - optionnellement de l'alumine hydratée (AI (OH)₃) ou calcinée Al₂O₃,
   b) on détermine la composition desdites sources de calcium et/ou de magnésium et/ou d'aluminium naturelles,
   c) sur la base de la ou lesdites compositions déterminées selon le point b), on détermine les quantités nécessaires en lesdites matières premières pour obtenir un verre de ladite composition cible,
   d) on effectue le mélange desdites matières selon lesdites quantités,
   e) on effectue la fusion dudit mélange et son refroidissement dans les conditions permettant l'obtention dudit verre, notamment sous forme de fibres après fibrage.

Selon des modes particuliers et avantageux de la présente invention qui peuvent bien entendu le cas échéant être combinés entre eux :
- Une source de calcium est un silicate de calcium minéral naturel comprenant, en pourcentage poids, plus de 30% de SiO₂ et plus de 15% de CaO, CaO et SiO₂ représentant ensemble plus de 60%, voire plus de 70% ou même plus de 80% du poids total de ladite source.
- Une source de magnésium est un silicate de magnésium minéral naturel comprenant, en pourcentage poids, plus de 30% de SiO₂ et plus de 15% de MgO, MgO et SiO₂ représentant ensemble plus de 60%, voire plus de 70% ou même plus de 75% du poids total de ladite source.
- Les matières premières dudit bain de fusion comprennent une source de calcium telle que décrite précédemment et une source de magnésium telle que décrite précédemment.
- Une source de magnésium est une matière minérale naturelle répondant à la composition suivante, en pourcentages poids :
   - SiO₂ : entre 40 et 55%, de préférence entre 45 et 50%,
   - Al₂O₃ : entre 0 et 10%, par exemple entre 1 et 10%
   - MgO : entre 20 et 40%, de préférence entre 25 et 35%,
   - MgO et SiO₂ représentant en cumulé de préférence au moins 70%, voire au moins 75%,
   - Fe₂O₃ : entre 0 et 4%, par exemple entre 1 et 3%
   - moins de 5% d'autres oxydes, de préférence moins de 3% d'autres oxydes
   - éventuellement de l'eau, notamment présente dans ladite source sous forme d'hydroxyde(s), de préférence dans une quantité inférieure à 20% et notamment comprise entre 5 et 15%.
- Une source de magnésium est une matière minérale naturelle répondant à la composition suivante, en pourcentages poids :
   - SiO₂ : entre 55 et 70%, de préférence entre 58 et 65%,
   - Al₂O₃ : entre 0 et 10%, par exemple entre 1 et 10%
   - MgO : entre 20 et 40%, de préférence entre 25 et 35%,
   - MgO et SiO₂ représentant en cumulé de préférence au moins 85%, voire au moins 90%,
   - Fe₂O₃ : entre 0 et 4%, par exemple entre 0,5 et 2%,
   - moins de 5% d'autres oxydes, de préférence moins de 3% d'autres oxydes,
   - éventuellement de l'eau de préférence dans une quantité inférieure à 20% et notamment comprise entre 5 et 15%.
- Une source de magnésium est une matière minérale naturelle répondant à la composition suivante, en pourcentages poids :
   - SiO₂ : entre 30 et 50%, de préférence entre 35 et 45%,
   - Al₂O₃ : entre 0 et 10%, par exemple entre 1 et 5%
   - MgO : entre 25 et 45%, de préférence entre 30 et 40%,
   - MgO et SiO₂ représentant en cumulé de préférence au moins 70%, voire au moins 75%,
   - Fe₂O₃ : entre 0 et 10%, par exemple entre 5 et 10%
   - moins de 5% d'autres oxydes, de préférence moins de 3% d'autres oxydes
   - éventuellement de l'eau, de préférence dans une quantité inférieure à 20% et notamment comprise entre 5 et 15%.
- Une source de calcium est une matière minérale naturelle répondant à la composition suivante, en pourcentages poids :
   - SiO₂ : entre 30 et 55%, de préférence entre 35 et 52%,
   - CaO : entre 35 et 55%, de préférence entre 40 et 50%,
   - CaO et SiO₂ représentant en cumulé de préférence au moins 80%, voire au moins 85%,
   - Fe₂O₃ : entre 0 et 4%, par exemple entre 0,1 et 0,5%
   - Al₂O₃ : entre 0 et 5%, par exemple entre 0,5 et 2%
   - CO₂ : entre 0 et 20%, notamment entre 5 et 15%
   - moins de 5% d'autres oxydes, de préférence moins de 3% d'autres oxydes.
- Une source de calcium est une matière minérale naturelle répondant à la composition suivante, en pourcentages poids :
   - SiO₂ : entre 40 et 55%, de préférence entre 40 et 50%,
   - CaO : entre 10 et 30%, de préférence entre 12 et 20%,
   - CaO et SiO₂ représentant en cumulé de préférence au moins 55%, voire au moins 60%,
   - Al₂O₃ : entre 10 et 40%, par exemple entre 25 et 35%,
   - Fe₂O₃ : entre 0 et 4%, par exemple entre 0,1 et 1%,
   - Na₂O : entre 0 et 4%,
   - moins de 5% d'autres oxydes, de préférence moins de 3% d'autres oxydes.
- On utilise comme matière première au moins une source de magnésium telle que décrite précédemment et au moins une source de calcium telle que décrite précédemment.
- L'ensemble des silicates présents dans le bain de fusion représente plus de 20% du poids total dudit bain, hormis la silice et le calcin recyclé, de préférence plus de 30%, voire plus 40% ou même plus de 45% du poids total dudit bain hormis la silice et le calcin recyclé.
- On introduit dans le bain de fusion du calcin de verre recyclé et/ou des fibres minérales recyclées, en particulier des fibres de laine de verre recyclée, le calcin de verre recyclé et/ou des fibres minérales recyclées représentant de préférence entre 1 et 60% du poids total du bain de fusion, de préférence entre 1 et 50% du poids total du bain de fusion, de préférence encore entre 20 et 40% du poids total du bain de fusion.
- Ledit calcin de verre répond à la composition suivante, en pourcentage poids :
   - SiO₂ : entre 65 et 80%, de préférence entre 70 et 75%,
   - Na₂O : entre 5 et 20%, de préférence entre 8 et 15%
   - CaO : entre 5 et 20%, de préférence entre 8 et 15%
   - Al₂O₃ : entre 0 et 10%, de préférence moins de 5%
   - MgO : entre 0 et 5%, de préférence moins de 3%,
   - Fe₂O₃ : entre 0 et 2%, de préférence moins de 1%,
   - moins de 5% d'autres oxydes, de préférence moins de 3% d'autres oxydes.

L'invention se rapporte également à un mélange de matières premières tel que décrit précédemment.

Les hydroxydes (OH) sont considérés selon la présente invention comme des oxydes et comme faisant partie de la composition chimique de la source, au contraire de l'eau libre (c'est à dire présente sous forme d'humidité dans la matière minérale naturelle).

On a ainsi pu obtenir des fibres de verre sans défauts à partir du mélange initial selon l'invention comme il sera montré dans les exemples qui suivent.

Selon l'invention, on introduit le moins possible de carbonate, voire aucun carbonate dans le mélange de matières premières. De préférence, la somme du poids de carbonate d'alcalin et de carbonate d'alcalino-terreux est inférieure à 35, de préférence inférieure à 30%, et de préférence inférieure à 10%, et de préférence inférieure à 5%, et de préférence inférieure à 1% en poids, voire est nulle dans le mélange de matières premières. Selon un mode possible avantageux, le mélange de matières premières est exempt de tout carbonate. Il est avantageusement apte à ne dégager sensiblement aucun oxyde de carbone lors de son chauffage et sa fusion en laine minérale.

Une des matières premières porteuses de silicium peut être introduite dans le mélange de matières premières sous forme de sable en tant que source principale ou secondaire de silicium. Egalement une source de silicium principale ou secondaire peut consister en du calcin verrier.

Une éventuelle matière première porteuse d'aluminium peut être introduite dans le mélange de matières premières sous forme de bauxite Al₂O₃ ou encore de poudre de feldspath par exemple de composition générale (K,Na)AlSi₃O₈, en tant que source principale ou secondaire d'aluminium.

Le mélange de matières premières est chauffé jusqu'à l'obtention d'un bain fondu, généralement dans un four. On chauffe plus ou moins haut en température et plus ou moins longtemps selon la qualité de fibres minérales que l'on cherche, notamment selon le degré de tolérance en particules non fondues (appelées « infondus »). Généralement, la température de chauffage du mélange initial est comprise entre 1200 et 1500°C pour sa fusion complète. Pour la transformation du mélange de matières premières, on peut faire appel aux techniques de fusion bien connues de l'homme du métier. Cette transformation peut être réalisée dans tout type de four comme un four électrique à électrodes, un four à brûleurs aérien comme un four à brûleurs transversaux ou un four à boucle, un four à brûleurs immergés.

Le mélange de matières premières, notamment pulvérulent, peut éventuellement être humidifié avant introduction dans un four afin de réduire les envols de matières premières dans le four en raison des courants de gaz de combustion.

Pour le chauffage et la fusion, le mélange de matières premières, le cas échéant humidifié, peut être introduit dans un four à l'état pulvérulent, ce qui implique que chaque matière première qu'il contient est à l'état de poudre ou sous forme de briquettes ou de granules, l'introduction pouvant se faire en une ou plusieurs étapes. Pour le chauffage et la fusion, le mélange de matières premières, le cas échéant humidifié, peut être introduit dans un four à l'état de composition comprenant du calcin et le mélange de matières premières, ce dernier étant le cas échéant pulvérulent.

Les exemples qui suivent, donnés purement à titre illustratif, montrent les avantages obtenus par application de la présente invention.

### Exemples

Selon une première série d'exemples, on prépare différents mélanges de matière premières afin de comparer un mélange tel qu'actuellement utilisé pour la fabrication de laine de verre ou de verre C pour l'obtention d'un verre de composition sensiblement identique, laquelle a sensiblement la formulation suivante en pourcentage poids d'oxydes :

**[Table 1]**

| **Eléments** | **Pourcentage poids%** |
|---|---|
| SiO₂ | 65,6 |
| CaO | 8,1 |
| B₂O₃ | 4,5 |
| Na₂O | 16,4 |
| MgO | 2,4 |
| Al₂O₃ | 2,1 |
| Fe₂O₃ | <1 (pref<0,5) |
| K₂O | 0,7 |
| Autres oxydes | impuretés |

### Exemple 1 (art antérieur)

Selon un premier exemple on synthétise une composition de verre répondant à la formulation précédente, selon les techniques actuelles.

Le tableau 2 ci-dessous donne les proportions des différentes matières premières et la composition finale du mélange ainsi obtenu :

**[Table 2]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | grammes | Pourcentage poids | | | | | | | | | |
| Sable | SiO₂ | 572,90 | 99,60 | 0,05 | | 0,01 | 0,03 | | | 0,03 | | |
| Feldspath | (K,Na)AlSi₃O₈ | 120,80 | 70,60 | 17,05 | 5,65 | 5,20 | 0,10 | 0,01 | | 0,20 | | |
| Na-carbonate | Na₂CO₃ | 237,50 | | | 58,10 | | | | | | 41,89 | |
| Borax | Na₂B₄O₇·5H₂O | 92,60 | | | 21,5 | | | | 48,5 | | | 28,8 |
| Calcaire | CaCO₃ | 83,90 | 0,05 | 0,02 | | | 55,55 | 0,25 | | 0,06 | 44,11 | |
| Dolomie | CaMg(CO₃)₂ | 111,40 | 0,05 | 0,05 | | | 30,60 | 21,30 | | 0,16 | 47,80 | |
| Composition verre finale (%poids) | | | 65,6 | 2,10 | 16,5 | 0,6 | 8,1 | 2,4 | 4,5 | 0,06 | | |

Le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est de 190 grammes.

### Exemple 2 :

Dans cet exemple le mélange de matières premières est cette fois tel que décrit dans le tableau 3 ci-dessous.

Dans ce mélange initial, on a introduit comme réactif, pour remplacer la dolomie, une autre matière minérale naturelle d'un oxyde de magnésium et de silicium directement issue d'une carrière « Trimouns » située à Luzenac en France.

Les hydroxydes sont considérés selon la présente invention comme faisant partie de la composition chimique de la source, au contraire de l'eau libre (c'est à dire présente sous forme d'humidité dans la matière minérale naturelle). Ils sont reportés dans le tableau ci-dessous en équivalent H₂O.

Cette matière est directement introduite, sans aucune transformation chimique et après un simple broyage visant à en adapter la granulométrie, en mélange avec les autres constituants dans des proportions ajustées en conséquence pour l'obtention d'un bain fondu d'oxydes de composition très proche de celle de l'exemple 1 de référence.

**[Table 3]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | grammes | Pourcentage poids | | | | | | | | | |
| Sable | SiO₂ | 526,50 | 99,60 | 0,05 | | 0,01 | 0,03 | | | 0,03 | | |
| Feldspath | (K,Na)AlSi₃O₈ | 120,80 | 70,60 | 17,05 | 5,65 | 5,20 | 0,10 | 0,01 | | 0,20 | | |
| Na-carbonate | Na₂CO₃ | 237,50 | | | 58,1 | | | | | | 41,9 | |
| Borax | Na₂B₄O₇·5H₂O | 92,60 | | | 21,5 | | | | 48,5 | | | 28,8 |
| Calcaire | CaCO₃ | 145,30 | 0,05 | 0,02 | | | 55,55 | 0,25 | | 0,06 | 44,11 | |
| « Trimouns » | | 75 | 61,7 | 0,2 | | | 0,02 | 31,5 | | 0,68 | | 4,84 |
| Composition verre finale (% poids) | | | 65,6 | 2,10 | 16,5 | 0,6 | 8,1 | 2,40 | 4,5 | 0,10 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 164 grammes, soit une diminution de 14% par rapport à l'exemple de référence.

### Exemple 3:

Dans cet exemple le mélange de matières premières est cette fois tel que décrit dans le tableau 4 ci-dessous.

Dans ce mélange initial on a introduit comme réactif, pour remplacer la dolomie, une autre matière minérale naturelle d'un silicate de magnésium directement issue d'une carrière située à Carino en Espagne. La composition en oxydes de cette matière minérale est donnée ci-après.

**[Table 4]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 547,50 | 99,60 | 0,05 | | 0,01 | 0,03 | | | 0,03 | | |
| Feldspath | (K,Na)AlSi₃O₈ | 120,80 | 70,60 | 17,05 | 5,65 | 5,20 | 0,10 | 0,01 | | 0,20 | | |
| Na-carbonate | Na₂CO₃ | 237,10 | | | 58,10 | | | | | | 41,89 | |
| Borax | Na₂B₄O₇·5H₂O | 92,60 | | | 21,50 | | | | 48,55 | | | 28,85 |
| Calcaire | CaCO₃ | 143,60 | 0,05 | 0,02 | | | 55,55 | 0,25 | | 0,06 | 44,11 | |
| « Carino » | | 64,8 | 39,1 | 2,4 | 0,04 | 0,05 | 1,50 | 36,5 | | 8,23 | | 12,15 |
| Composition verre finale (% poids) | | | 65,6 | 2,3 | 16,5 | 0,64 | 8,1 | 2,4 | 4,5 | 0,6 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 163 grammes, soit une diminution de 14% par rapport à l'exemple de référence.

### Exemple 4:

Dans cet exemple le mélange de matières premières est cette fois tel que décrit dans le tableau 5 ci-dessous.

Plus précisément on a utilisé dans cet exemple comme source minérale de la matière minérale « Carino » décrites dans l'exemple qui précède, ainsi qu'une autre matière minérale naturelle d'un silicate de calcium directement issue d'une carrière située à Hermosillo au Mexique.

**[Table 5]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 487,2 | 99,6 | 0,05 | | 0,01 | 0,03 | | | 0,03 | | |
| Feldspath | (K,Na)AlSi₃O₈ | 108,6 | 70,6 | 17,05 | 5,65 | 5,20 | 0,10 | 0,01 | | 0,20 | | |
| Na-carbonate | Na₂CO₃ | 239,2 | | | 58,1 | | | | | | 41,89 | |
| Borax | Na₂B₄O₇·5H₂O | 92,6 | | | 21,5 | | | | 48,55 | | | 28,85 |
| « Hermosillo » | | 171,6 | 40,50 | 0,43 | 0,06 | 0,08 | 46,50 | 0,60 | | 0,24 | 11,54 | 0,12 |
| « Carino » | | 62,8 | 39,14 | 2,44 | 0,04 | 0,05 | 1,50 | 36,5 | | 8,23 | | 12,15 |
| Composition finale verre | | | 65,6 | 2,10 | 16,5 | 0,6 | 8,10 | 2,40 | 4,50 | 0,60 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 120 grammes, soit une diminution de 37% par rapport à l'exemple de référence.

### Exemple 5:

Dans cet exemple le mélange de matières premières est cette fois tel que décrit dans le tableau 6 ci-dessous.

Plus précisément on a utilisé dans cet exemple les mêmes silicates naturels de magnésium et de calcium que dans l'exemple qui précède mais on utilise cette fois de l'hydroxyde de sodium comme matière première source de Na.

**[Table 6]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | grammes | Pourcentage poids | | | | | | | | | |
| Sable | SiO₂ | 487,1 | 99,60 | 0,05 | | 0,01 | 0,03 | | | 0,03 | | |
| Feldspath | (K,Na)AlSi₃O₈ | 108,7 | 70,60 | 17,05 | 5,65 | 5,20 | 0,10 | 0,01 | | 0,20 | | |
| Na-hydroxide | NaOH | 179,3 | | | 77,49 | | | | | | | 22,51 |
| Borax | Na₂B₄O₇·5H₂O | 92,6 | | | 21,50 | | | | 48,55 | | | 28,85 |
| « Hermosillo » | | 171,6 | 40,50 | 0,43 | 0,06 | 0,08 | 46,50 | 0,60 | | 0,24 | 11,5 | 0,12 |
| « Carino » | | 62,9 | 39,1 | 2,4 | 0,04 | 0,05 | 1,50 | 36,5 | | 8,2 | | 12,1 |
| Composition finale verre (% poids) | | | 65,6 | 2,10 | 16,5 | 0,6 | 8,10 | 2,40 | 4,50 | 0,60 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 20 grammes, soit une diminution de 90% par rapport à l'exemple de référence.

**Selon une seconde série d'exemples,** on prépare différents mélanges de matière premières pour l'obtention d'un verre de composition sensiblement identique à la formulation décrite dans le tableau 1 mais en utilisant comme matière première du calcin de verre recyclé.

### Exemple 6 (comparatif)

Selon un exemple de référence on synthétise une composition de verre typique pour la confection de laine de verre ou de verre C répondant à la composition décrite dans le tableau 7, selon les techniques actuelles et les matières premières habituellement utilisées mais en y introduisant 36% de calcin de verre de bouteille, dont la composition en oxydes est donnée ci-après.

Le tableau 7 ci-dessous donne les proportions des différentes matières premières et la composition finale du mélange ainsi obtenu :

**[Table 7]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 292,20 | 99,60 | 0,05 | | 0,01 | 0,03 | | | 0,03 | | |
| Calcin bouteille | | 420,50 | 72,50 | 1,50 | 11,70 | 0,30 | 12,30 | 0,90 | | 0,06 | | |
| Feldspath | (K,Na)AlSi₃O₈ | 85,00 | 70,60 | 17,05 | 5,65 | 5,20 | 0,10 | 0,01 | | 0,20 | | |
| Na-carbonate | Na₂CO₃ | 157,30 | | | 58,10 | | | | | | 41,89 | |
| Borax | Na₂B₄O₇·5H₂O | 92,60 | | | 21,50 | | | | 48,55 | | | 28,85 |
| Dolomie | CaMg(CO₃)₂ | 95,10 | 0,05 | 0,05 | | | 30,60 | 21,30 | | 0,16 | 47,80 | |
| Composition finale verre (% poids) | | | 65,6 | 2,10 | 16,5 | 0,6 | 8,1 | 2,4 | 4,5 | 0,1 | | |

Le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est de 111 grammes.

### Exemple 7 :

Dans cet exemple le mélange de matières premières est cette fois-ci tel que décrit dans le tableau 8 ci-dessous.

Plus précisément on a utilisé dans cet exemple du calcin, et comme source de magnésium le composé minéral naturel « Trimouns » décrit précédemment. Ces matières sont directement introduites, sans aucune transformation chimique et après un simple broyage visant à en adapter la granulométrie, en mélange avec le calcin et les autres constituants dans des proportions ajustées en conséquence pour l'obtention d'un mélange fondu de composition très proche de celle de l'exemple de référence.

**[Table 8]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 98,40 | 99,60 | 0,05 | | 0,01 | 0,03 | | | 0,03 | | |
| Calcin de bouteille | | 658,00 | 72,50 | 1,50 | 11,70 | 0,30 | 12,30 | 0,90 | | 0,06 | | |
| Feldspath | (K,Na)AlSi₃O₈ | 64,50 | 70,60 | 17,05 | 5,65 | 5,20 | 0,10 | 0,01 | | 0,20 | | |
| Na-carbonate | Na₂CO₃ | 112,20 | | | 58,10 | | | | | | 41,89 | |
| Borax | Na₂B₄O₇·5H₂O | 92,60 | | | 21,50 | | | | 48,55 | | | 28,85 |
| « Trimouns » | | 57,4 | 61,67 | 0,19 | | | 0,02 | 31,52 | | 0,68 | | 4,84 |
| Composition finale verre (%poids) | | | 65,60 | 2,10 | 16,57 | 0,53 | 8,10 | 2,40 | 4,50 | 0,09 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 48 grammes, soit une diminution de 75% par rapport à l'exemple 1 de référence et de 57% par rapport à l'exemple comparatif 6.

### Exemple 8 :

Dans cet exemple le mélange de matières premières est cette fois tel que décrit dans le tableau 9 ci-dessous.

Plus précisément on a utilisé dans cet exemple du calcin, et comme source de magnésium le composé minéral naturel « Carino » décrit précédemment. Ces matières sont directement introduites, sans aucune transformation chimique et après un simple broyage visant à en adapter la granulométrie, en mélange avec le calcin et les autres constituants dans des proportions ajustées en conséquence pour l'obtention d'un mélange fondu de composition très proche de celle de l'exemple de référence.

**[Table 9]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 123,10 | 99,60 | 0,05 | | 0,01 | 0,03 | | | 0,03 | | |
| calcin | bouteille | 652,00 | 72,50 | 1,50 | 11,70 | 0,30 | 12,30 | 0,90 | | 0,06 | | |
| Feldspath | (K,Na)AlSi₃O₈ | 58,50 | 70,60 | 17,05 | 5,65 | 5,20 | 0,10 | 0,01 | | 0,20 | | |
| Na-carbonate | Na₂CO₃ | 114,40 | | | 58,10 | | | | | | 41,89 | |
| Borax | Na₂B₄O₇·5H₂O | 92,60 | | | 21,50 | | | | 48,55 | | | 28,85 |
| « Carino » | | 49,5 | 39,1 | 2,4 | 0,04 | 0,05 | 1,50 | 36,52 | | 8,23 | | 12,15 |
| Composition finale du verre (% poids) | | | 65,6 | 2,1 | 16,6 | 0,5 | 8,1 | 2,4 | 4,5 | 0,46 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. La quantité de CO₂ dégagée est cette fois de 48 grammes, soit une diminution de 75% par rapport à l'exemple 1 de référence et de 57% par rapport à l'exemple comparatif 6.

### Exemple 9 :

Dans cet exemple le mélange de matières premières est cette fois tel que décrit dans le tableau 10 ci-dessous.

Plus précisément on a utilisé dans cet exemple du calcin, comme source de magnésium le composé minéral naturel « Carino » décrit précédemment et comme source de sodium du NaOH. Ces matières sont directement introduites, sans aucune transformation chimique et après un simple broyage visant à en adapter la granulométrie, en mélange avec le calcin et les autres constituants dans des proportions ajustées en conséquence pour l'obtention d'un mélange fondu de composition très proche de celle de l'exemple de référence.

**[Table 10]**

| | | Bain | SiO₂ | Al₂O₃ | Na₂O | K₂O | CaO | MgO | B₂O₃ | Fe₂O₃ | CO₂ | H₂O |
|---|---|---|---|---|---|---|---|---|---|---|---|---|
| Nom | Formule | gramme | Pourcentage poids | | | | | | | | | |
| Sable | SiO₂ | 123,10 | 99,60 | 0,05 | | 0,01 | 0,03 | | | 0,03 | | |
| calcin | bouteille | 652,00 | 72,50 | 1,50 | 11,70 | 0,30 | 12,30 | 0,90 | | 0,06 | | |
| Feldspath | (K,Na)AlSi₃O₈ | 58,50 | 70,60 | 17,05 | 5,65 | 5,20 | 0,10 | 0,01 | | 0,20 | | |
| Na-hydroxide | NaOH | 85,80 | | | 77,49 | | | | | | | 22,51 |
| Borax | Na₂B₄O₇·5H₂O | 92,60 | | | 21,50 | | | | 48,55 | | | 28,85 |
| « Carino » | | 49,5 | 39,14 | 2,4 | 0,04 | 0,05 | 1,50 | 36,5 | | 8,2 | | 12,15 |
| Composition finale du verre | | | 65,60 | 2,10 | 16,6 | 0,50 | 8,10 | 2,40 | 4,50 | 0,46 | | |

Comme pour l'exemple 1, le mélange de matières premières est introduit à chaud dans un creuset en platine dans un four flammes (combustion air-gaz ou oxy-gaz) à 1450°C jusqu'à la fusion complète du mélange pour une durée totale de 3h15 incluant 120 min d'affinage. Cette fusion ne dégage pas de CO₂.

Les avantages et la qualité du verre obtenu à partir des bains fondus de verre selon les exemples 1 à 9 qui précèdent, sont indiqués dans le tableau 11 ci-dessous, dans lequel on a reporté différents critères d'appréciation obtenus selon les mesures suivantes :
1°) Rendement
   C'est le rapport entre la quantité de verre produite et la quantité de matières premières enfournée. Plus ce ratio est élevé, plus la quantité de verre pouvant être produit est élevé et plus les émissions de gaz (CO₂, H₂O) sont faibles.
2°) Quantité de sable : c'est la quantité de sable utilisée par rapport à l'exemple 1 de référence (en pourcentage poids économisé). Outre les considérations de santé liées à la consommation excessive de sable (risque de silicose), diminuer la quantité de sable utilisée au profit d'autres matières minérales tels que les silicates naturels permet de diminuer l'énergie pour fondre le verre, la matière première la plus réfractaire du bain étant la silice.
3°) Energie consommée : c'est la quantité d'énergie économisée par rapport à l'exemple 1 de référence (en pourcentage). Cette mesure correspond à l'énergie nécessaire à la fusion du mélange de matières premières correspondant à chaque exemple.
4°) Qualité de l'affinage (ou taux bulles) :
   On mesure le nombre de bulles par kilogramme de verre fondu à 1480°C pendant 120 minutes. Plus cet indice est élevé plus l'affinage est de bonne qualité.
   *** : nombre de bulles exemple/nombre de bulles exemple 1 de référence < 100%
   **** : nombre de bulles exemple/nombre de bulles exemple 1 de référence < 50%
5°) Homogénéité en SiO₂ :
   L'indice de qualité est proportionnel à l'homogénéité en SiO₂ (telle que mesurée par microsonde/EDS) du verre fondu à 1480°C pendant 120min.
   L'homogénéité est mesurée par une série de mesures de la quantité de SiO₂ en différents points du verre et un écart type est ensuite déterminé.
   ** : écart type SiO₂ (mesurée par microsonde/EDS) >0,5%
   *** : écart type SiO₂ (mesurée par microsonde/EDS) compris entre 0,1 et 0,5%
   **** : écart type SiO₂ (mesurée par microsonde/EDS) <0,1%

**Table 11]**

| | Ex. 1 | Ex.2 | Ex.3 | Ex.4 | Ex. 5 | Ex.6 | Ex.7 | Ex.8 | Ex.9 |
|---|---|---|---|---|---|---|---|---|---|
| Rendement (%) | 82 | 84 | 83 | 86 | 91 | 87,5 | 92,3 | 91,7 | 94,2 |
| Quantité de sable économisée (%) | Ref. | 8 | 4 | 15 | 15 | Ref. | 45 | 58 | 58 |
| Energie économisée (%) | Ref. | 2,1 | 2,3 | 7,7 | 18,7 | Ref. | 10,9 | 10,9 | 17 |
| Affinage | Ref. | *** | | *** | *** | Ref. | *** | | *** |
| Homogénéité en SiO₂ | ** | *** | *** | *** | *** | ** | *** | *** | *** |

La comparaison des résultats ci-dessus montre que les exemples 2 à 5 et 7 à 9 selon l'invention montrent des indices de qualité globalement supérieurs aux exemples 1 et 6 de référence.

Les exemples 4 et 5 selon l'invention dans lesquels on utilise comme matières premières dudit bain de fusion en combinaison une source de calcium constitué par un silicate de calcium minéral naturel et une source de magnésium constituée par un silicate de magnésium minéral naturel apparait même particulièrement avantageux, selon tous les critères reportées dans le tableau 9 précédant.

## Revendications

1. Procédé de fabrication de verre, en particulier de fibres de verre présentant une composition cible, comprenant la fusion d'un mélange de matières premières constituant un bain de fusion, ladite composition cible répondant à la formulation suivante, en pourcentage poids :
SiO₂ : entre 50 et 75%, de préférence entre 60 et 70%
Na₂O: entre 10 et 25%, de préférence entre 10 et 20%
CaO: entre 5 et 15%, de préférence entre 5 et 10%
MgO : entre 1 à 10%, de préférence entre 2 et 5%
CaO et MgO représentant ensemble de préférence entre 5 et 20%
B₂O₃ : entre 0 et 10%, de préférence entre 2 et 8%
Al₂O₃ : entre 0 et 8%, de préférence entre 1 et 6%
K₂O : entre 0 et 5%, de préférence entre 0,5 et 2%
Na₂O et K₂O représentant ensemble de préférence entre 12 et 20%
Oxyde de fer : entre 0 et 3%, de préférence moins de 2%, de préférence encore moins de 1%,
autre (s) oxyde (s) : entre 0 et 5 % poids en cumulé, de préférence moins de 3% en cumulé,
le reste étant constitué d'impuretés inévitables,
ledit procédé étant **caractérisé en ce qu'**il comprend les étapes suivantes :
a) on sélectionne les matières premières dudit bain de fusion dont au moins:
- une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
- au moins une source de sodium de préférence choisie parmi l'hydroxyde de sodium NaOH, le carbonate de sodium Na₂CO₃ ou un mélange de d'hydroxyde de sodium NaOH et de carbonate de sodium Na₂CO₃,
- au moins une source de bore de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite,
- au moins une source de calcium choisie parmi un silicate de calcium minéral naturel comprenant, en pourcentage poids, plus de 30% de SiO₂ et plus de 10% de CaO, CaO et SiO₂ représentant ensemble plus de 60% du poids total de ladite source, et/ou
- au moins une source de magnésium choisie parmi un silicate de magnésium minéral naturel comprenant, en pourcentage poids, plus de 30% de SiO₂ et plus de 10% de MgO, MgO et SiO₂ représentant ensemble plus de 60% du poids total de ladite source,
- éventuellement au moins une source d'aluminium choisie parmi un oxyde mixte d'aluminium avec au moins un élément choisi dans le groupe constitué par Si, Ca, Na, K en particulier un silicate d'aluminium,
dans lequel lesdites sources de calcium et/ou de magnésium et/ou d'aluminium sont des matières minérales naturelles, c'est à dire issues d'un milieu géologique naturel et non transformées,
- optionnellement du calcaire CaCO₃ ou un hydroxyde de calcium tel que la Portlandite Ca(OH)₂,
- optionnellement de la dolomie CaMg(CO₃)₂,
- optionnellement de l'alumine hydratée (AI (OH)₃) ou calcinée Al₂O₃,
b) on détermine la composition desdites sources de calcium et/ou de magnésium et/ou d'aluminium naturelles,
c) sur la base de la ou lesdites compositions déterminées selon le point b), on détermine les quantités nécessaires en lesdites matières premières pour obtenir un verre de ladite composition cible,
d) on effectue le mélange desdites matières selon lesdites quantités,
e) on effectue la fusion dudit mélange et son refroidissement dans les conditions permettant l'obtention dudit verre, notamment sous forme de fibres après fibrage.

2. Procédé selon la revendication précédente, dans lequel ladite source de calcium est un silicate de calcium minéral naturel comprenant, en pourcentage poids, plus de 30% de SiO₂ et plus de 15% de CaO, CaO et SiO₂ représentant ensemble plus de 60%, voire plus de 70% ou même plus de 80% du poids total de ladite source.

3. Procédé selon l'une des revendications précédentes, dans lequel ladite source de magnésium est un silicate de magnésium minéral naturel comprenant, en pourcentage poids, plus de 30% de SiO₂ et plus de 15% de MgO, MgO et SiO₂ représentant ensemble plus de 60%, voire plus de 70% ou même plus de 75% du poids total de ladite source.

4. Procédé selon l'une des revendications 2 et 3, dans lequel les matières premières dudit bain de fusion comprennent une source de calcium qui est un silicate de calcium minéral naturel comprenant, en pourcentage poids, plus de 30% de SiO₂ et plus de 10% de CaO, de préférence plus de 15% de CaO, CaO et SiO₂ représentant ensemble plus de 60%, voire plus de 70% ou même plus de 80% du poids total de ladite source et une source de magnésium qui est un silicate de magnésium minéral naturel comprenant, en pourcentage poids, plus de 30% de SiO₂ et plus de 10% de MgO, de préférence plus de 15% de MgO, MgO et SiO₂ représentant ensemble plus de 60%, voire plus de 70% ou même plus de 75% du poids total de ladite source.

5. Procédé selon l'une des revendications précédentes, dans lequel ladite source de magnésium est une matière minérale naturelle répondant à la composition suivante, en pourcentages poids :
- SiO₂ : entre 40 et 55%, de préférence entre 45 et 50%,
- Al₂O₃ : entre 0 et 10%, par exemple entre 1 et 10%
- MgO : entre 20 et 40%, de préférence entre 25 et 35%,
- MgO et SiO₂ représentant en cumulé au moins 70%, voire au moins 75%,
- Fe₂O₃ : entre 0 et 4%, par exemple entre 1 et 3%
- moins de 5% d'autres oxydes, de préférence moins de 3% d'autres oxydes
- éventuellement de l'eau, notamment présente dans ladite source sous forme d'hydroxyde(s), de préférence dans une quantité inférieure à 20% et notamment comprise entre 5 et 15%.

6. Procédé selon l'une des revendications 1 à 4 dans lequel ladite source de magnésium est une matière minérale naturelle répondant à la composition suivante, en pourcentages poids :
- SiO₂ : entre 55 et 70%, de préférence entre 58 et 65%,
- Al₂O₃ : entre 0 et 10%, par exemple entre 1 et 10%
- MgO : entre 20 et 40%, de préférence entre 25 et 35%,
- MgO et SiO₂ représentant en cumulé au moins 85%, voire au moins 90%,
- Fe₂O₃: entre 0 et 4%, par exemple entre 0,5 et 2%,
- moins de 5% d'autres oxydes, de préférence moins de 3% d'autres oxydes,
- éventuellement de l'eau de préférence dans une quantité inférieure à 20% et notamment comprise entre 5 et 15%.

7. Procédé selon l'une des revendications 1 à 4 dans lequel ladite source de magnésium est une matière minérale naturelle répondant à la composition suivante, en pourcentages poids :
- SiO₂ : entre 30 et 50%, de préférence entre 35 et 45%,
- Al₂O₃ : entre 0 et 10%, par exemple entre 1 et 5%
- MgO : entre 25 et 45%, de préférence entre 30 et 40%,
- MgO et SiO₂ représentant en cumulé au moins 70%, voire au moins 75%,
- Fe₂O₃ : entre 0 et 10%, par exemple entre 5 et 10%
- moins de 5% d'autres oxydes, de préférence moins de 3% d'autres oxydes,
- éventuellement de l'eau, de préférence dans une quantité inférieure à 20% et notamment comprise entre 5 et 15%.

8. Procédé selon l'une des revendications précédentes dans lequel ladite source de calcium est une matière minérale naturelle répondant à la composition suivante, en pourcentages poids :
- SiO₂ : entre 30 et 55%, de préférence entre 35 et 52%,
- CaO : entre 35 et 55%, de préférence entre 40 et 50%,
- CaO et SiO₂ représentant en cumulé au moins 80%, voire au moins 85%,
- Fe₂O₃ : entre 0 et 4%, par exemple entre 0,1 et 0,5%
- Al₂O₃: entre 0 et 5%, par exemple entre 0,5 et 2%
- CO₂ : entre 0 et 20%, notamment entre 5 et 15%
- moins de 5% d'autres oxydes, de préférence moins de 3% d'autres oxydes.

9. Procédé selon la revendication 1 dans lequel ladite source de calcium est une matière minérale naturelle répondant à la composition suivante, en pourcentages poids :
- SiO₂ : entre 40 et 55%, de préférence entre 40 et 50%,
- CaO : entre 10 et 30%, de préférence entre 12 et 20%,
- CaO et SiO₂ représentant en cumulé au moins 55%, voire au moins 60%,
- Al₂O₃: entre 10 et 40%, par exemple entre 25 et 35%,
- Fe₂O₃: entre 0 et 4%, par exemple entre 0,1 et 1%,
- Na₂O : entre 0 et 4%,
- moins de 5% d'autres oxydes, de préférence moins de 3% d'autres oxydes.

10. Procédé dans lequel on utilise comme matière première au moins une source de magnésium telle que décrite dans l'une des revendications 5 à 7 et au moins une source de calcium telle que décrite selon l'une des revendications 8 ou 9.

11. Procédé selon l'une des revendications précédentes, dans lequel on introduit dans le bain de fusion du calcin de verre recyclé et/ou des fibres minérales recyclées, en particulier des fibres de laine de verre recyclée.

12. Procédé selon la revendication précédente, dans lequel le calcin de verre recyclé et/ou les fibres minérales recyclées représente(nt) entre 1 et 50% du poids total du bain de fusion, de préférence entre 20 et 40% du poids total du bain de fusion.

13. Procédé selon l'une des revendications précédentes, dans lequel le calcin de verre répond à la composition suivante, en pourcentage poids :
- SiO₂ : entre 65 et 80%, de préférence entre 70 et 75%,
- Na₂O : entre 5 et 20%, de préférence entre 8 et 15%
- CaO : entre 5 et 20%, de préférence entre 8 et 15%
- Al₂O₃ : entre 0 et 10%, de préférence moins de 5%
- MgO : entre 0 et 5%, de préférence moins de 3%,
- Fe₂O₃ : entre 0 et 2%, de préférence moins de 1%,
- moins de 5% d'autres oxydes, de préférence moins de 3% d'autres oxydes.

14. Mélange de matières premières tel que décrit dans l'une des revendications précédentes comprenant :
- une source de silicium notamment choisie parmi la silice, un calcin de verre, des fibres minérales recyclées, en particulier de laine de verre recyclée, en particulier un mélange de silice et de calcin de verre ou un mélange de silice et de fibres minérales recyclées, ou encore un mélange de silice, de calcin de verre et de fibres minérales recyclées,
- au moins une source de sodium de préférence choisie parmi l'hydroxyde de sodium NaOH, le carbonate de sodium Na₂CO₃ ou un mélange de d'hydroxyde de sodium NaOH et de carbonate de sodium Na₂CO₃,
- au moins une source de bore de préférence choisie parmi un oxyde de bore tel que le pentaborax ou un oxyde mixte de bore avec au moins un élément choisi dans le groupe constitué par Si, Mg, Ca, en particulier un oxyde choisi dans le groupe constitué par la colémanite, l'ulexite, la tincalconite ou la kernite ou leurs mélanges,
- au moins une source de calcium choisie parmi un silicate de calcium minéral naturel comprenant, en pourcentage poids, plus de 30% de SiO₂ et plus de 10% de CaO, de préférence plus de 15% de CaO, CaO et SiO₂ représentant ensemble plus de 60%, voire plus de 70% ou même plus de 80% du poids total de ladite source, et/ou
- au moins une source de magnésium choisie parmi un silicate de magnésium minéral naturel comprenant, en pourcentage poids, plus de 30% de SiO2 et plus de 10% de MgO, de préférence plus de 15% de MgO, MgO et SiO2 représentant ensemble plus de 60%, voire plus de 70% ou même plus de 75% du poids total de ladite source,
- éventuellement au moins une source d'aluminium choisie parmi un oxyde mixte d'aluminium avec au moins un élément choisi dans le groupe constitué par Si, Ca, Na, K en particulier un silicate d'aluminium,
dans lequel lesdites sources de calcium et/ou de magnésium et/ou d'aluminium sont des matières minérales naturelles, c'est à dire issues d'un milieu géologique naturel et non transformées,
- optionnellement du calcaire CaCO₃ ou un hydroxyde de calcium tel que la Portlandite Ca(OH)₂,
- optionnellement de la dolomie CaMg(CO₃)₂,
- optionnellement de l'alumine hydratée (AI (OH)₃) ou calcinée Al₂O₃.

## Patentansprüche

1. Verfahren zum Herstellen von Glas, insbesondere von Glasfasern, die eine Zielzusammensetzung aufweisen, umfassend das Schmelzen einer Mischung von Rohstoffen, die ein Schmelzbad bilden, wobei die Zielzusammensetzung folgender Formulierung in Gewichtsprozent entspricht:
SiO₂: zwischen 50 und 75 %, vorzugsweise zwischen 60 und 70 %
Na₂O: zwischen 10 und 25 %, vorzugsweise zwischen 10 und 20 %
CaO: zwischen 5 und 15 %, vorzugsweise zwischen 5 und 10 %
MgO: zwischen 1 und 10 %, vorzugsweise zwischen 2 und 5 %,
wobei CaO und MgO zusammen vorzugsweise zwischen 5 und 20 % ausmachen
B₂O₃: zwischen 0 und 10 %, vorzugsweise zwischen 2 und 8 %
Al₂O₃: zwischen 0 und 8 %, vorzugsweise zwischen 1 und 6 %
K₂O: zwischen 0 und 5 %, vorzugsweise zwischen 0,5 und 2 %,
wobei Na₂O und K₂O zusammen vorzugsweise zwischen 12 und 20 % ausmachen
Eisenoxid: zwischen 0 und 3 %, vorzugsweise weniger als 2 %, noch mehr bevorzugt weniger als 1 %,
andere(s) Oxid(e): zwischen 0 und 5 % kumulativ, vorzugsweise weniger als 3 % kumulativ,
wobei der Rest unvermeidbare Verunreinigungen sind,
wobei das Verfahren **dadurch gekennzeichnet ist, dass** es folgende Schritte umfasst:
a) Auswählen der Rohstoffe des Schmelzbades, darunter mindestens:
- eine Siliziumquelle, insbesondere ausgewählt aus Siliziumdioxid, Glasbruch, recycelten Mineralfasern, insbesondere recycelter Glaswolle, insbesondere einer Mischung von Siliziumdioxid und Glasbruch oder einer Mischung von Siliziumdioxid und recycelten Mineralfasern oder einer Mischung von Siliziumdioxid, Glasbruch und recycelten Mineralfasern,
- mindestens eine Natriumquelle, vorzugsweise ausgewählt aus Natriumhydroxid NaOH, Natriumcarbonat Na₂CO₃ oder einer Mischung von Natriumhydroxid NaOH und Natriumcarbonat Na₂CO₃,
- mindestens eine Borquelle, vorzugsweise ausgewählt aus einem Boroxid wie Pentaborax oder einem Mischoxid aus Bor mit mindestens einem Element aus der Gruppe bestehend aus Si, Mg, Ca, insbesondere einem Oxid ausgewählt aus der Gruppe bestehend aus Colemanit, Ulexit, Tincalconit oder Kernit,
- mindestens eine Calciumquelle, ausgewählt aus einem natürlichen mineralischen Calciumsilicat, umfassend in Gewichtsprozent mehr als 30 % SiO₂ und mehr als 10 % CaO, wobei CaO und SiO₂ zusammen mehr als 60 % des Gesamtgewichts der genannten Quelle ausmachen, und/oder
- mindestens eine Magnesiumquelle, ausgewählt aus einem natürlichen mineralischen Magnesiumsilicat, umfassend in Gewichtsprozent mehr als 30 % SiO₂ und mehr als 10 % MgO, wobei MgO und SiO₂ zusammen mehr als 60 % des Gesamtgewichts der genannten Quelle ausmachen,
- optional mindestens eine Aluminiumquelle, ausgewählt aus einem Mischoxid von Aluminium mit mindestens einem Element, ausgewählt aus der Gruppe bestehend aus Si, Ca, Na, K, insbesondere einem Aluminiumsilikat,
wobei die genannte Calcium- und/oder Magnesiumquelle natürliche mineralische Stoffe sind, d. h. aus einer natürlichen geologischen Umgebung stammen und nicht umgewandelt wurden,
- optional Kalkstein CaCO₃ oder ein Calciumhydroxid wie Portlandit Ca(OH)₂,
- optional Dolomit CaMg(CO₃)₂,
- optional hydratisiertes Aluminiumoxid (Al(OH)₃) oder kalziniertes Al₂O₃,
b) Bestimmen der Zusammensetzung der natürlichen Calcium- und/oder Magnesium- und/oder Aluminiumquellen,
c) Bestimmen, auf Basis der gemäß Punkt b) bestimmten Zusammensetzung(en), der zum Erhalten einer Mischung der Zielzusammensetzung erforderlichen Mengen der Rohstoffe,
d) Mischen der Stoffe in den genannten Mengen,
e) Schmelzen der Mischung und Abkühlen unter Bedingungen, die das Erhalten des Glases, insbesondere in Form von Fasern nach der Zerfaserung, ermöglichen.

2. Verfahren nach dem vorstehenden Anspruch, wobei die Calciumquelle ein natürliches mineralisches Calciumsilicat ist, umfassend in Gewichtsprozent mehr als 30 % SiO₂ und mehr als 15 % CaO, wobei CaO und SiO₂ zusammen mehr als 60 %, sogar mehr als 70 % oder sogar mehr als 80 % des Gesamtgewichts der Quelle ausmachen.

3. Verfahren nach einem der vorstehenden Ansprüche, wobei die Magnesiumquelle ein natürliches mineralisches Magnesium ist, umfassend in Gewichtsprozent mehr als 30 % SiO₂ und mehr als 15 % MgO, wobei MgO und SiO₂ zusammen mehr als 60 %, sogar mehr als 70 % oder sogar mehr als 75 % des Gesamtgewichts der Quelle ausmachen.

4. Verfahren nach einem der Ansprüche 2 und 3, wobei die Rohstoffe der Schmelze eine Calciumquelle umfassen, bei der es sich um ein natürliches mineralisches Calciumsilicat handelt, umfassend in Gewichtsprozent mehr als 30 % SiO₂ und mehr als 10 % CaO, vorzugsweise mehr als 15 % CaO, wobei CaO und SiO₂ zusammen mehr als 60 %, sogar mehr als 70 % oder sogar mehr als 80 % des Gesamtgewichts der Quelle ausmachen, und eine Magnesiumquelle, bei der es sich um ein natürliches mineralisches Magnesiumsilicat handelt, umfassend in Gewichtsprozent mehr als 30 % SiO₂ und mehr als 10 % MgO, vorzugsweise mehr als 15 % MgO, wobei MgO und SiO₂ zusammen mehr als 60 %, sogar mehr als 70 % oder sogar mehr als 75 % des Gesamtgewichts der Quelle ausmachen.

5. Verfahren nach einem der vorstehenden Ansprüche, wobei die Magnesiumquelle ein natürlicher mineralischer Stoff ist, der folgender Zusammensetzung in Gewichtsprozent entspricht:
- SiO₂: zwischen 40 und 55 %, vorzugsweise zwischen 45 und 50 %,
- Al₂O₃: zwischen 0 und 10 %, zum Beispiel zwischen 1 und 10 %
- MgO: zwischen 20 und 40 %, vorzugsweise zwischen 25 und 35 %,
- wobei MgO und SiO₂ kumuliert mindestens 70 %, sogar mindestens 75 % ausmachen
- Fe₂O₃: zwischen 0 und 4 %, zum Beispiel zwischen 1 und 3 %
- weniger als 5 % andere Oxide, vorzugsweise weniger als 3 % andere Oxide
- eventuell Wasser, das in der Quelle insbesondere in Form von Hydroxid(en), vorzugsweise in einer Menge von weniger als 20 % und insbesondere zwischen 5 und 15 % vorhanden ist.

6. Verfahren nach einem der Ansprüche 1 bis 4, wobei die Magnesiumquelle ein natürlicher mineralischer Stoff ist, der folgender Zusammensetzung in Gewichtsprozent entspricht:
- SiO₂: zwischen 55 und 70 %, vorzugsweise zwischen 58 und 65 %
- Al₂O₃: zwischen 0 und 10 %, zum Beispiel zwischen 1 und 10 %
- MgO: zwischen 20 und 40 %, vorzugsweise zwischen 25 und 35 %,
- wobei MgO und SiO₂ kumuliert mindestens 85 %, sogar mindestens 90 % ausmachen
- Fe₂O₃: zwischen 0 und 4 %, zum Beispiel zwischen 0,5 und 2 %
- weniger als 5 % andere Oxide, vorzugsweise weniger als 3 % andere Oxide
- eventuell Wasser, vorzugsweise in einer Menge von weniger als 20 % und insbesondere zwischen 5 und 15 %.

7. Verfahren nach einem der Ansprüche 1 bis 4, wobei die Magnesiumquelle ein natürlicher mineralischer Stoff ist, der folgender Zusammensetzung in Gewichtsprozent entspricht:
- SiO₂: zwischen 30 und 50 %, vorzugsweise zwischen 35 und 45 %
- Al₂O₃: zwischen 0 und 10 %, zum Beispiel zwischen 1 und 5 %
- MgO: zwischen 25 und 45 %, vorzugsweise zwischen 30 und 40 %,
- wobei MgO und SiO₂ kumuliert mindestens 70 %, sogar mindestens 75 % ausmachen
- Fe₂O₃: zwischen 0 und 10 %, zum Beispiel zwischen 5 und 10 %
- weniger als 5 % andere Oxide, vorzugsweise weniger als 3 % andere Oxide
- eventuell Wasser, vorzugsweise in einer Menge von weniger als 20 % und insbesondere zwischen 5 und 15 %.

8. Verfahren nach einem der vorstehenden Ansprüche, wobei die Calciumquelle ein natürlicher mineralischer Stoff ist, der folgender Zusammensetzung in Gewichtsprozent entspricht:
- SiO₂: zwischen 30 und 55 %, vorzugsweise zwischen 35 und 52 %
- CaO: zwischen 35 und 55 %, vorzugsweise zwischen 40 und 50 %,
- wobei CaO und SiO₂ kumuliert mindestens 80 %, sogar mindestens 85 % ausmachen
- Fe₂O₃: zwischen 0 und 4 %, zum Beispiel zwischen 0,1 und 0,5 %
- Al₂O₃: zwischen 0 und 5 %, zum Beispiel zwischen 0,5 und 2 %
- CO₂: zwischen 0 und 20 %, insbesondere zwischen 5 und 15 %
- weniger als 5 % andere Oxide, vorzugsweise weniger als 3 % andere Oxide.

9. Verfahren nach Anspruch 1, wobei die Calciumquelle ein natürlicher mineralischer Stoff ist, der folgender Zusammensetzung in Gewichtsprozent entspricht:
- SiO₂: zwischen 40 und 55 %, vorzugsweise zwischen 40 und 50 %
- CaO: zwischen 10 und 30 %, vorzugsweise zwischen 12 und 20 %,
- wobei CaO und SiO₂ kumuliert mindestens 55 %, sogar mindestens 60 % ausmachen
- Al₂O₃: zwischen 10 und 40 %, zum Beispiel zwischen 25 und 35 %
- Fe₂O₃: zwischen 0 und 4 %, zum Beispiel zwischen 0,1 und 1 %
- Na₂O: zwischen 0 und 4 %
- weniger als 5 % andere Oxide, vorzugsweise weniger als 3 % andere Oxide.

10. Verfahren, wobei als Rohstoff mindestens eine Magnesiumquelle wie nach einem der Ansprüche 5 bis 7 beschrieben und mindestens eine Calciumquelle wie nach einem der Ansprüche 8 oder 9 beschrieben verwendet werden.

11. Verfahren nach einem der vorstehenden Ansprüche, wobei in das Schmelzbad recycelter Glasbruch und/oder recycelte Mineralfasern, insbesondere recycelte Glaswollefasern, eingebracht werden.

12. Verfahren nach dem vorstehenden Anspruch, wobei der recycelte Glasbruch und/oder die recycelten Mineralfasern zwischen 1 und 50 % des Gesamtgewichts des Schmelzbades, vorzugsweise zwischen 20 und 40 % des Gesamtgewichts des Schmelzbades, ausmachen.

13. Verfahren nach einem der vorstehenden Ansprüche, wobei der Glasbruch folgender Zusammensetzung in Gewichtsprozent entspricht:
- SiO₂: zwischen 65 und 80 %, vorzugsweise zwischen 70 und 75 %
- Na₂O: zwischen 5 und 20 %, vorzugsweise zwischen 8 und 15 %
- CaO: zwischen 5 und 20 %, vorzugsweise zwischen 8 und 15 %
- Al₂O₃: zwischen 0 und 10 %, vorzugsweise weniger als 5 %
- MgO: zwischen 0 und 5 %, vorzugsweise weniger als 3 %
- Fe₂O₃: zwischen 0 und 2 %, vorzugsweise weniger als 1 %
- weniger als 5 % andere Oxide, vorzugsweise weniger als 3 % andere Oxide.

14. Mischung von Rohstoffen wie in einem der vorstehenden Ansprüche beschrieben, umfassend:
- eine Siliziumquelle, insbesondere ausgewählt aus Siliziumdioxid, Glasbruch, recycelten Mineralfasern, insbesondere recycelter Glaswolle, insbesondere einer Mischung von Siliziumdioxid und Glasbruch oder einer Mischung von Siliziumdioxid und recycelten Mineralfasern oder einer Mischung von Siliziumdioxid, Glasbruch und recycelten Mineralfasern,
- mindestens eine Natriumquelle, vorzugsweise ausgewählt aus Natriumhydroxid NaOH, Natriumcarbonat Na₂CO₃ oder einer Mischung von Natriumhydroxid NaOH und Natriumcarbonat Na₂CO₃,
- mindestens eine Borquelle, vorzugsweise ausgewählt aus einem Boroxid wie Pentaborax oder einem Mischoxid aus Bor mit mindestens einem Element aus der Gruppe bestehend aus Si, Mg, Ca, insbesondere einem Oxid ausgewählt aus der Gruppe bestehend aus Colemanit, Ulexit, Tincalconit oder Kernit oder deren Mischungen,
- mindestens eine Calciumquelle, ausgewählt aus einem natürlichen mineralischen Calciumsilicat, umfassend in Gewichtsprozent mehr als 30 % SiO₂ und mehr als 10 % CaO, vorzugsweise mehr als 15 % CaO, wobei CaO und SiO₂ zusammen mehr als 60 %, sogar mehr als 70 % oder sogar mehr als 80 % des Gesamtgewichts der genannten Quelle ausmachen, und/oder
- mindestens eine Magnesiumquelle, ausgewählt aus einem natürlichen mineralischen Magnesiumsilicat, umfassend in Gewichtsprozent mehr als 30 % SiO₂ und mehr als 10 % MgO, vorzugsweise mehr als 15 % MgO, wobei MgO und SiO₂ zusammen mehr als 60 %, sogar mehr als 70 % oder sogar mehr als 75 % des Gesamtgewichts der genannten Quelle ausmachen,
- optional mindestens eine Aluminiumquelle, ausgewählt aus einem Mischoxid von Aluminium mit mindestens einem Element, ausgewählt aus der Gruppe bestehend aus Si, Ca, Na, K, insbesondere einem Aluminiumsilikat,
wobei die genannte Calcium- und/oder Magnesiumquelle natürliche mineralische Stoffe sind, d. h. aus einer natürlichen geologischen Umgebung stammen und nicht umgewandelt wurden,
- optional Kalkstein CaCO₃ oder ein Calciumhydroxid wie Portlandit Ca(OH)₂,
- optional Dolomit CaMg (CO₃)₂,
- optional hydratisiertes Aluminiumoxid (Al (OH)₃) oder kalziniertes Al₂O₃.

## Claims

1. A method for manufacturing glass, in particular glass fibers having a target composition, comprising the melting of a mixture of raw materials constituting a melting bath, said target composition meeting the following criteria, in weight percentages:
SiO₂: between 50 and 75%, preferably between 60 and 70%
Na₂O: between 10 and 25%, preferably between 10 and 20%
CaO: between 5 and 15%, preferably between 5 and 10%
MgO: between 1 and 10%, preferably between 2 and 5%
CaO and MgO together representing preferably between 5 and 20%
B₂O₃: between 0 and 10%, preferably between 2 and 8%
Al₂O₃: between 0 and 8%, preferably between 1 and 6%
K₂O: between 0 and 5%, preferably between 0.5 and 2%
Na₂O and K₂O together representing preferably between 12 and 20%
Iron oxide: between 0 and 3%, preferably less than 2%, more preferably less than 1%,
other oxide(s): between 0 and 5% in total by weight, preferably less than 3% in total,
the remainder consisting of unavoidable impurities,
said method being **characterized in that** it comprises the following steps:
a) selecting the raw materials of said melt from at least:
- a silicon source, in particular chosen from silica, a glass cullet, recycled mineral fibers, in particular of recycled glass wool, in particular a mixture of silica and glass cullet or a mixture of silica and recycled mineral fibers, or a mixture of silica, glass cullet and recycled mineral fibers,
- at least one sodium source preferably selected from sodium hydroxide NaOH, sodium carbonate Na₂CO₃ or a mixture of sodium hydroxide NaOH and sodium carbonate Na₂CO₃
- at least one boron source preferably selected from a boron oxide such as pentaborax or a mixed oxide of boron with at least one element selected from the group consisting of Si, Mg, Ca, in particular an oxide selected from the group consisting of colemanite, ulexite, tincalconite or kernite,
- at least one calcium source selected from a natural mineral calcium silicate comprising, in percentage by weight, more than 30% of SiO₂ and more than 10% CaO, CaO and SiO₂ together representing more than 60% of the total weight of said source, and/or
- at least one magnesium source selected from a natural mineral magnesium silicate comprising, in percentage by weight, more than 30% of SiO₂ and more than 10% MgO, MgO and SiO₂ together representing more than 60% of the weight of said source,
- optionally at least one aluminum source selected from a mixed aluminum oxide with at least one element selected from the group consisting of Si, Ca, Na, K in particular an aluminum silicate,
wherein said calcium and/or magnesium and/or aluminum sources are natural mineral materials, that is to say, unprocessed mineral materials originating from a natural geological environment,
- optionally, limestone CaCO₃ or a calcium hydroxide such as Portlandite Ca(OH)₂,
- optionally dolomite CaMg(CO₃)₂,
- optionally, hydrated alumina (Al(OH)₃) or calcinated alumina Al₂O₃,
b) the composition of said natural sources of calcium and/or magnesium and/or aluminum is determined,
c) on the basis of said composition(s) determined according to point b), determining the necessary quantities of said raw materials to obtain a glass of said target composition,
d) mixing said materials according to said quantities,
e) the melting of said mixture and its cooling under conditions making it possible to obtain said glass, in particular in the form of fibers after fiberizing.

2. The method according to the preceding claim, wherein said calcium source is a natural mineral calcium silicate comprising, in percentage by weight, more than 30% of SiO₂ and more than 15% CaO, CaO and SiO₂ together representing more than 60%, or more than 70% or even more than 80% of the total weight of said source.

3. The method according to one of the preceding claims, wherein said magnesium source is a natural mineral magnesium silicate comprising, in percentage by weight, more than 30% of SiO₂ and more than 15% MgO, MgO and SiO₂ together representing more than 60%, or more than 70% or even more than 75% of the weight of said source.

4. The method according to claims 2 and 3, wherein the raw materials of said molten bath comprise a calcium source which is a natural mineral calcium silicate comprising, in percentage by weight, more than 30% SiO₂ and more than 10% CaO, preferably more than 15% CaO, CaO and SiO₂ together representing more than 60%, or more than 70% or even more than 80% of the total weight of said source and a magnesium source which is a natural mineral magnesium silicate comprising, in percentage by weight, more than 30% SiO₂ and more than 10% MgO, preferably more than 15% MgO, MgO and SiO₂ together representing more than 60%, or more than 70% or even more than 75% of the total weight of said source.

5. The method according to one of the preceding claims, wherein said magnesium source is a natural mineral material corresponding to the following composition, in percentages by weight:
- SiO₂: between 40 and 55%, preferably between 45 and 50%,
- Al₂O₃: between 0 and 10%, for example between 1 and 10%,
- MgO: between 20 and 40%, preferably between 25 and 35%
- MgO and SiO₂ cumulatively representing at least 70%, or even at least 75%,
- Fe₂O₃: between 0 and 4%, for example between 1 and 3%
- less than 5% of other oxides, preferably less than 3% of other oxides
- optionally water, in particular present in said source in the form of hydroxide(s), preferably in an amount of less than 20% and in particular between 5 and 15%.

6. The method according to one of claims 1 or 4, wherein said magnesium source is a natural mineral material corresponding to the following composition, in percentages by weight:
- SiO₂: between 55 and 70%, preferably between 58 and 65%,
- Al₂O₃: between 0 and 10%, for example between 1 and 10%
- MgO: between 20 and 40%, preferably between 25 and 35%,
- MgO and SiO₂ cumulatively representing at least 85%, or even at least 90%,
- Fe₂O₃: between 0 and 4%, for example between 0.5 and 2%,
- less than 5% of other oxides, preferably less than 3% of other oxides,
- optionally water, preferably in an amount of less than 20% and in particular between 5 and 15%.

7. The method according to one of claims 1 or 4, wherein said magnesium source is a natural mineral material corresponding to the following composition, in percentages by weight:
- SiO₂: between 30 and 50%, preferably between 35 and 45%,
- Al₂O₃: between 0 and 10%, for example between 1 and 5%,
- MgO: between 25 and 45%, preferably between 30 and 40%
- MgO and SiO₂ cumulatively representing at least 70%, or even at least 75%,
- Fe₂O₃: between 0 and 10%, for example between 5 and 10%
- less than 5% of other oxides, preferably less than 3% of other oxides,
- optionally water, preferably in an amount of less than 20% and in particular between 5 and 15%.

8. The method according to one of the preceding claims, wherein said calcium source is a natural mineral material corresponding to the following composition, in percentages by weight:
- SiO₂: between 30 and 55%, preferably between 35 and 52%,
- CaO: between 35 and 55%, preferably between 40 and 50%,
- CaO and SiO₂ cumulatively representing at least 80%, or even at least 85%,
- Fe₂O₃: between 0 and 4%, for example between 0.1 and 0.5%
- Al₂O₃: between 0 and 5%, for example between 0.5 and 2%
- CO₂: between 0 and 20%, in particular between 5 and 15%
- less than 5% of other oxides, preferably less than 3% of other oxides.

9. The method according to the claim 1, wherein said calcium source is a natural mineral material corresponding to the following composition, in percentages by weight:
- SiO₂: between 40 and 55%, preferably between 40 and 50%,
- CaO: between 10 and 30%, preferably between 12 and 20%,
- CaO and SiO₂ cumulatively representing at least 55%, or even at least 60%,
- Al₂O₃: between 10 and 40%, for example between 25 and 35%,
- Fe₂O₃: between 0 and 4%, for example between 0.1 and 1%,
- Na₂O: between 0 and 4%,
- less than 5% of other oxides, preferably less than 3% of other oxides.

10. A method wherein at least one magnesium source as described in one of claims 5 to 7 and at least one calcium source as described in one of claims 8 or 9 are used as raw materials.

11. The method according to one of the preceding claims, wherein recycled glass cullet and/or recycled mineral fibers, in particular recycled glass wool fibers, are introduced into the molten bath.

12. The method according to the preceding claim, wherein the recycled glass cullet and/or recycled mineral fibers represent between 1 and 50% of the total weight of the molten bath, preferably between 20 and 40% of the total weight of the molten bath.

13. The method according to one of the preceding claims, wherein the glass cullet satisfies the following composition, in percentage by weight:
- SiO₂: between 65 and 80%, preferably between 70 and 75%,
- Na₂O: between 5 and 20%, preferably between 8 and 15%
- CaO: between 5 and 20%, preferably between 8 and 15%
- Al₂O₃: between 0 and 10%, preferably less than 5%
- MgO: between 0 and 5%, preferably less than 3%,
- Fe₂O₃: between 0 and 2%, preferably less than 1%,
- less than 5% of other oxides, preferably less than 3% of other oxides.

14. A mixture of raw materials as described in one of the preceding claims comprising:
- a silicon source, in particular chosen from silica, a glass cullet, recycled mineral fibers, in particular of recycled glass wool, in particular a mixture of silica and glass cullet or a mixture of silica and recycled mineral fibers, or a mixture of silica, glass cullet and recycled mineral fibers,
- at least one sodium source preferably selected from sodium hydroxide NaOH, sodium carbonate Na₂CO₃ or a mixture of sodium hydroxide NaOH and sodium carbonate Na₂CO₃,
- at least one boron source preferably selected from a boron oxide such as pentaborax or a mixed oxide of boron with at least one element selected from the group consisting of Si, Mg, Ca, in particular an oxide selected from the group consisting of colemanite, ulexite, tincalconite or kernite or mixtures thereof,
- at least one calcium source selected from a natural mineral calcium silicate comprising, in percentage by weight, more than 30% of SiO₂ and more than 10% CaO, preferably more than 15% CaO, CaO and SiO₂ together representing more than 60%, or more than 70% or even more than 80% of the total weight of said source, and/or
- at least one magnesium source selected from a natural mineral magnesium silicate comprising, in percentage by weight, more than 30% of SiO₂ and more than 10% MgO, preferably more than 15% MgO, MgO and SiO₂ together representing more than 60%, or more than 70% or even more than 75% of the weight of said source,
- optionally at least one aluminum source selected from a mixed aluminum oxide with at least one element selected from the group consisting of Si, Ca, Na, K in particular an aluminum silicate,
wherein said calcium and/or magnesium and/or aluminum sources are natural mineral materials, that is, unprocessed mineral materials originating from a natural geological environment,
- optionally, limestone CaCO₃ or a calcium hydroxide such as Portlandite Ca(OH)₂,
- optionally dolomite CaMg(CO₃)₂,
- optionally, hydrated alumina (Al(OH)₃) or calcinated alumina Al₂O₃.
